# EUROPÄISCHE PATENTANMELDUNG

(11) **EP 0 928 956 A2**
(43) Veröffentlichungstag der Anmeldung: **14.07.1999**
(21) Anmeldenummer: 98120944.8
(22) Anmeldetag: 04.11.1998
(51) Int. Cl.: G01J 3/46

(54) **Verfahren zur farbmetrischen Charakterisierung eines selbstleuchtenden Abbildungssystem**

(30) Priorität: 15.12.1997 DE 19755655
(71) Anmelder: LOGO Kommunikations- und Drucktechnik GmbH, 48565 Steinfurt (DE)
(72) Erfinder: Seegers, Björn, Dr., 48161 Münster (DE); Braun, Thorsten, 48432 Rheine-Mesum (DE)
(74) Vertreter: Tetzner, Volkmar, Dr.-Ing. Dr. jur.

(57) **Zusammenfassung**

Die Erfindung betrifft ein Verfahren zur farbmetrischen Charakterisierung eines selbstleuchtenden Abbildungssystems, bei dem das Abbildungssystem ein Farbfeld erzeugt, das visuell mit einem Referenzfarbfeld abgeglichen wird, wobei als Referenzfarbfeld eine transparente Farbfilterfolie mit bekannten farbmetrischen Referenzwerten verwendet wird, die eine Bezugsfarbfläche des Abbildungssystems abdeckt. Die Erfindung sieht ferner die Verwendung des Verfahrens zur farbmetrischen Charakterisierung eines selbstleuchtenden Abbildungssystems zur Kalibrierung des Abbildungssystems vor.

## Beschreibung

Die Erfindung betrifft ein Verfahren zur farbmetrischen Charakterisierung eines selbstleuchtenden Abbildungssystemes, bei dem das Abbildungssystem ein Farbfeld erzeugt, das visuell mit einem Referenzfarbfeld abgeglichen wird.

Unter selbstleuchtenden Abbildungssystemen sind insbesondere Computer-Monitore, Fernseher, Großbildprojektoren und dergleichen zu verstehen. Als farbmetrische Charakterisierung bezeichnet man die farbmetrische Beschreibung der aktuellen Abbildungseigenschaften eines Abbildungssystems, das beispielsweise auch aus einer Kombination des eigentlichen Monitors mit einer Treibersoftware und/oder Grafikkarte bestehen kann.

Zur Charakterisierung von Farbmonitoren werden heute in der Regel spezielle Farbmeßgeräte eingesetzt, die entweder mit an die Augenempfindlichkeit angepaßten Filtern (häufig als Dreibereichs- oder Tristimulus-Farbmeßgeräte bezeichnet) oder spektralen Sensoren (in Spektralphotometern) ausgestattet sind. Mit Hilfe der Meßdaten werden dann sogenannte Farbprofile erstellt.

Die bekannten Farbmeßgeräte haben jedoch den Nachteil, daß die Beleuchtungsbedingungen der Monitorumgebung in dem gekapselten Farbmeßgerät nicht berücksichtigt werden. Bei preiswerteren Meßgeräten kommt hinzu, daß die Meßgeometrie nicht annähernd der Kugelform des menschlichen Auges entspricht.

Ein relativ kostengünstiges und einfaches Verfahren stellt der visuelle Abgleich mit Farbmusterfeldern dar, bei dem die Farbmusterfelder neben das zu untersuchende Abbildungssystem gehalten werden, um dann ein am Abbildungssystem erzeugtes Farbfeld entsprechend abzugleichen. Dieses bekannte Verfahren stellt jedoch nur eine Näherungslösung dar, da für einen guten Abgleich eine ausreichende Ausleuchtung des Farbmusterfeldes einerseits und ein möglichst geringer Lichteinfall auf den Monitor andererseits erforderlich wäre, was jedoch nicht zu realisieren ist, da die Farbmusterfelder in unmittelbarer Nähe des Monitors und des durch ihn erzeugten Farbfeldes gehalten werden müssen.

Außerdem entstehen metamere Effekte durch die unterschiedliche Beleuchtung von Farbmusterfeld und selbstleuchtendem Abbildungssystem.

Der Erfindung liegt daher die Aufgabe zugrunde, ein sehr einfaches und preiswertes, aber dennoch möglichst genaues Verfahren zur farbmetrischen Charakterisierung eines selbstleuchtenden Abbildungssystems anzugeben.

Erfindungsgemäß wird diese Aufgabe durch die Merkmale des Anspruches 1 gelöst.

Das erfindungsgemäße Verfahren beruht auf folgenden Verfahrensschritten:
a) Verwendung eines als transparente Farbfilterfolie ausgebildeten Referenz-Farbfeldes mit bekannten farbmetrischen Referenzwerten,
b) Erzeugung einer Bezugsfarbfläche am Abbildungssystem,
c) Abdecken wenigstens eines Teils der Bezugsfarbfläche mit der transparenten Farbfilterfolie,
d) Erzeugung eines Farbfeldes am Abbildungssystem in der Nähe des durch die transparente Farbfilterfolie abgedeckten Bereichs,
e) visueller Abgleich des Farbfeldes bis der Farbeindruck dieses Farbfeldes mit dem Farbeindruck des durch die transparente Farbfilterfolie generierten Farbsignals übereinstimmt,
f) Vergleich der sich ergebenden farbmetrischen Werte des abgeglichenen Farbfeldes mit den farbmetrischen Referenzwerten des Referenzfarbfeldes zur farbmetrischen Charakterisierung des Abbildungssystems.

In einem bevorzugten Ausführungsbeispiel werden die Schritte b) bis e) mit weiteren, sich von der ersten Farbfilterfolie unterscheidenden transparenten Farbfilterfolien wiederholt. Bei dem erfindungsgemäßen Verfahren werden verfälschende Meßeinflüsse ausgeschlossen, die dadurch entstehen, daß die Meßgeometrie in einem herkömmlichen, gekapselten Farbmeßgerät untergebracht ist, die in der Regel von den realen Betrachtungsbedingungen abweicht. Das erfindungsgemäße Verfahren berücksichtigt insbesondere auch Umgebungsparameter, die die Wahrnehmung beeinflussen, wie beispielsweise das Umgebungslicht.

Teure Farbmeßgeräte werden so konzipiert, daß sie das menschliche Wahrnehmungssystem möglichst gut simulieren. Das erfindungsgemäße Verfahren nutzt die hervorragende farbvergleichende Eigenschaft des Auges direkt aus, indem der Abgleich des vom Abbildungssystem erzeugten Farbfeldes mit dem Farbeindruck des durch die transparente Farbfilterfolie generierten Farbsignals visuell erfolgt.

Im Gegensatz zum visuellen Abgleich mit Farbmusterfeldern werden im erfindungsgemäßen Verfahren nur diejenigen Umgebungsparameter berücksichtigt, die tatsächlich bei der Betrachtung von selbstleuchtenden Abbildungssystemen zum Tragen kommen.

Das erfindungsgemäße Verfahren läßt sich besonders vorteilhaft bei der Kalibrierung von selbstleuchtenden Abbildungssystem verwenden, wobei die Einstellung des Abbildungssystemes anhand des Vergleichsergebnisses der sich ergebenden farbmetrischen Werte des abgeglichenen Farbfeldes mit den farbmetrischen Referenzwerten des Referenzfarbfeldes durchgeführt wird.

Weitere Ausgestaltungen der Erfindung sind Gegenstand der Unteransprüche.

Im folgenden wird ein Ausführungsbeispiel und weitere Aspekte der Erfindung näher beschrieben.

Erfindungsgemäß kommt als Referenzfarbfeld wenigstens eine transparente Farbfilterfolie zur Anwendung. Vorzugsweise verwendet man jedoch drei Folien, die im roten, grünen und blauen Teil des sichtbaren Spektrums transparent sind und somit als RGB-Filter dienen. Diese Farbfilterfolien werden zunächst in einem Transmissionsfarbmeßgerät vermessen, um so deren spektrale bzw. farbmetrische Filtereigenschaften als farbmetrische Referenzwerte festzustellen.

Das Abbildungssystem, bei dem es sich beispielsweise um einen Computer-Monitor, einen Fernseher, einen Großbildprojektor oder dergleichen handelt, wird zunächst auf einen geeigneten Schwarz- und Weißpunkt kalibriert.

Das eigentliche Verfahren zur farbmetrischen Charakterisierung des selbstleuchtenden Abbildungssystems wird durch ein geeignetes Anwendungsprogramm gesteuert, das zunächst eine Bezugsfarbfläche, beispielsweise ein neutrales Weiß, erzeugt, das dann wenigstens teilweise durch eine der Farbfilterfolien abgedeckt wird. Bei einer im roten, grünen oder blauen Teil des Spektrums transparenten Farbfilterfolie wird für den Betrachter durch den Filtereffekt der Folie (subtraktive Farbmischung) ein roter, grüner oder blauer Farbeindruck generiert.

Das Anwendungsprogramm erzeugt anschließend direkt neben dem durch die transparente Farbfilterfolie abgedeckten Bereich ein Farbfeld. Im nächsten Schritt findet ein visueller Abgleich dieses Farbfeldes mit dem durch die transparente Farbfilterfolie generierten Farbsignal statt. Mit Hilfe des Anwendungsprogrammes wird dabei in dem erzeugten Farbfeld eine geeignete Kombination der drei Steuersignale Rot, Grün und Blau des Abbildungssystems in additiver Farbmischung gesucht, die denselbsen Farbeindruck erzeugt, der subtraktiv durch die Filterfunktion der Farbfilterfolie generiert wird. Das Auge wird hierbei als sehr empfindliches und sicheres Vergleichsinstrument eingesetzt. Die gefundene RGB-Kombination wird abgespeichert.

Wenn keine RGB-Kombination gefunden wird, die genau dem Farbeindruck des durch die Farbfilterfolie generierten Farbsignals entspricht, kann die RGB-Kombination mit der bestmöglichen Näherung ermittelt werden.

Bei Verwendung von mehreren transparenten Farbfilterfolien werden die entsprechenden Verfahrensschritte mit der nächsten Farbfilterfolie wiederholt.

Durch Vergleich der sich ergebenden farbmetrischen Werte der abgeglichenen Farbfelder mit den farbmetrischen Referenzwerten der Referenzfarbfelder läßt sich eine farbmetrische Charakterisierung des gesamten Abbildungssystems ableiten.

Besonders vorteilhaft läßt sich das oben beschriebene Verfahren zur farbmetrischen Charakterisierung eines selbstleuchtenden Abbildungssystems auch zur Kalibrierung des Abbildungssystems verwenden.

So läßt sich beispielsweise der Weißpunkt eines Monitors dadurch kalibrieren, daß man durch Übereinanderlegen aller transparenter Farbfilterfolien ein neutrales Grau erzeugt, und man das generierte Farbfeld am Abbildungssystem visuell abgleicht, bis dessen Farbeindruck mit dem neutralen Grau der Farbfilterfolien übereinstimmt. Die sich ergebenden farbmetrischen Werte des abgeglichenen Farbfeldes dienen dann zur Einstellung des Weißpunktes des Monitors.

Bei einer weiteren Anwendung könnte das erfindungsgemäße Verfahren auch zur Einstellung einer bestimmten Lichtintensität des Monitors dienen.

## Patentansprüche

1. Verfahren zur farbmetrischen Charakterisierung eines selbstleuchtenden Abbildungssystems, bei dem das Abbildungssystem ein Farbfeld erzeugt, das visuell mit einem Referenzfarbfeld abgeglichen wird,
gekennzeichnet durch folgende Verfahrensschritte:
a) Verwendung eines als transparente Farbfilterfolie ausgebildeten Referenzfarbfeldes mit bekannten farbmetrischen Referenzwerten;
b) Erzeugung einer Bezugsfarbfläche am Abbildungssystem;
c) Abdecken wenigstens eines Teils der Bezugsfarbfläche mit der transparenten Farbfilterfolie;
d) Erzeugung eines Farbfeldes am Abbildungssystem in der Nähe des durch die transparente Farbfilterfolie abgedeckten Bereichs;
e) visueller Abgleich des Farbfeldes bis der Farbeindruck des Farbfeldes mit dem Farbeindruck des durch die transparente Farbfilterfolie generierten Farbsignals übereinstimmt;
f) Vergleich der sich ergebenden farbmetrischen Werte des abgeglichenen Farbfeldes mit den farbmetrischen Referenzwerten des Referenzfarbfeldes zur farbmetrischen Charakterisierung des Abbildungssystems.

2. Verfahren nach Anspruch 1, dadurch gekennzeichnet, daß die Schritte b) bis e) mit weiteren, sich von der ersten Farbfilterfolie unterscheidenden, transparenten Farbfilterfolien wiederholt werden.

3. Verfahren nach einem der vorhergehenden Ansprüche, dadurch gekennzeichnet, daß die farbmetrischen Referenzwerte der Farbfilterfolie mit einem Transmissionsfarbmeßgerät ermittelt werden.

4. Verfahren nach einem der vorhergehenden Ansprüche, dadurch gekennzeichnet, daß drei Farbfilterfolien zum Einsatz kommen, die im roten, grünen oder blauen Teil der sichtbare Strahlung transparent sind.

5. Verwendung des Verfahrens nach Anspruch 1 zur Kalibrierung des selbstleuchtenden Abbildungssystems.

6. Verwendung nach Anspruch 5, dadurch gekennzeichnet, daß die Kalibrierung des selbstleuchtenden Abbildungssystems anhand des Vergleichs der sich ergebenden farbmetrischen Werte des abgeglichenen Farbfeldes mit den farbmetrischen Referenzwerten des Referenzfarbfeldes durchgeführt wird.
